# FASCICULE DE BREVET EUROPEEN

(11) **EP 2 868 188 B1**
(45) Date de publication et mention de la délivrance du brevet: **27.03.2019**
(21) Numéro de dépôt: 14191536.3
(22) Date de dépôt: 03.11.2014
(51) Int. Cl.: A01G 2/10

(54) **Procédé de reproduction d'un plant originel se reproduisant de manière végétative**
Verfahren zur Zucht einer ursprünglichen Pflanze, die sich auf vegetative Weise reproduziert
Method for reproducing an original plant replicating in a vegetative manner

(30) Priorité: 05.11.2013 FR 1360811
(43) Date de publication de la demande: 06.05.2015
(73) Titulaire: DHM Innovation, 82200 Malause (FR)
(72) Inventeur: Lannes, Patrice, 82200 Malause (FR); Lannes, Jean-Philippe, 82200 Malause (FR)
(74) Mandataire: Cabinet Le Guen Maillet

(56) Documents cités:
- WO-A1-2007/042327
- FR-A1- 2 879 891
- US-A- 5 438 796
- US-A1- 2004 122 592
- US-B2- 8 314 701
- NA: "How to Grow Cuttings from Established Plants", www.wikihow.com , 30 April 2006 (2006-04-30), Retrieved from the Internet: URL:http://www.wikihow.com/Grow-Cuttings-f rom-Established-Plants [retrieved on 2016-12-02]

## Description

La présente invention concerne un procédé de reproduction d'un plant muni d'un moyen de marquage, ainsi qu'un tel plant.

La plupart des végétaux comportent une tige, le long de laquelle se développent des feuilles, et à la base de laquelle poussent des racines.

Certains végétaux se reproduisent de manière végétative. C'est-à-dire qu'à partir d'un seul plant originel, il est possible d'obtenir de nouveaux plants uniquement en sectionnant la tige du plant originel et en plantant la partie ainsi sectionnée dans un terrain approprié pour permettre le développement de nouvelles racines.

Il est alors impossible de distinguer le plant originel, des plants obtenus par reproduction végétative.

Pour assurer la traçabilité des plants, il est connu de mettre en place une étiquette sur chaque plant issu de la reproduction. Après la plantation, une telle étiquette est fixée à l'aide de liens autour de la tige. Un tel système de traçabilité ne donne pas entière satisfaction car l'étiquette peut être facilement retirée ou perdue.

En outre, certains végétaux sont protégés par des certificats d'obtention végétale et dans le cas de végétaux à reproduction végétative, il est impossible de discerner un plant autorisé, d'un plant pouvant être issu d'une reproduction non autorisée.

Le document « How to Grow Cuttings from Established Plants » du 30 avril 2006 divulgue la procédure classique de reproduction végétative, à savoir une étape de prélèvement, une étape de plantation et une étape de développement.

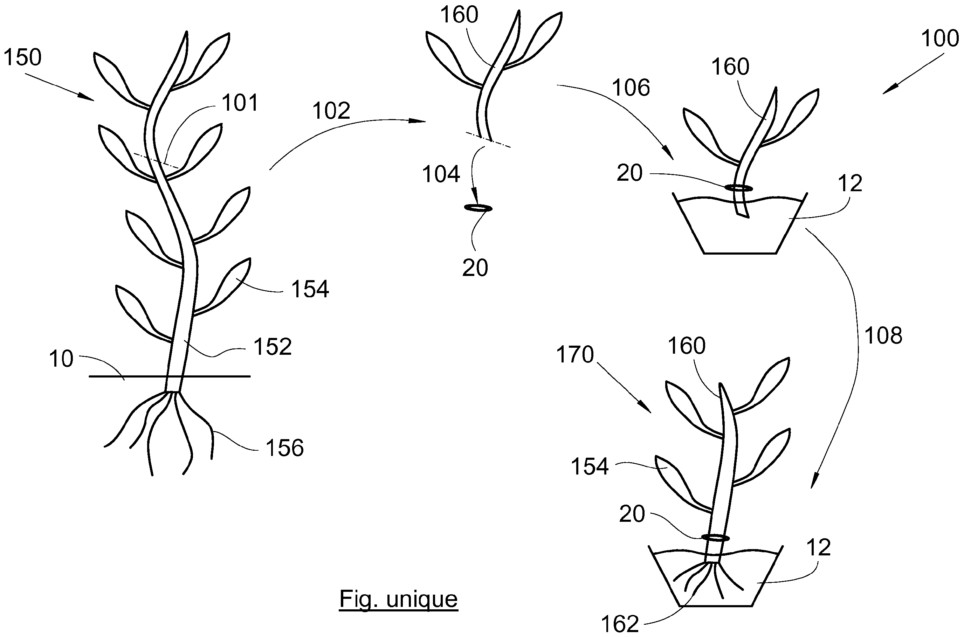

Le document WO-A-2007/042327 prévoit la mise en place d'une puce dans la plante après incision de celle-ci ce qui peut entraîner une dégradation de ladite plante ou la mise en place d'un collier portant la puce autour de la plante. La simple mise en place d'un collier détachable qui peut être pratiquement attaché ou détaché à volonté comme celui qui est présenté dans ce document (Fig. 10) ne permet pas de garantir la provenance de la plante puisque celui-ci peut être mis à n'importe quel stade de la croissance de ladite plante.

Un objet de la présente invention est de proposer un procédé de reproduction d'un plant muni d'un moyen de marquage qui ne présente pas les inconvénients de l'art antérieur et qui en particulier permet une traçabilité accrue du plant ainsi équipé.

A cet effet, est proposé un procédé de reproduction selon la revendication 1.

Selon l'invention, lors de l'étape de prélèvement, la partie prélevée comporte au moins une feuille.

Avantageusement, l'anneau présente un élément codé difficilement reproductible.

Avantageusement, l'anneau est constitué par tout élément formant une boucle fermée qui ne peut être ouverte que par destruction.

L'invention propose également un plant muni d'un anneau et obtenu par un procédé de reproduction selon l'une des variantes précédentes à partir d'un plant originel se reproduisant de manière végétative et comportant une tige le long de laquelle se développent des feuilles, et à la base de laquelle poussent des racines, et l'anneau étant emprisonné entre lesdites racines et une feuille.

Les caractéristiques de l'invention mentionnées ci-dessus, ainsi que d'autres, apparaîtront plus clairement à la lecture de la description suivante d'un exemple de réalisation, ladite description étant faite en relation avec la Fig. unique jointe et qui représente les étapes d'un procédé de reproduction 100 selon l'invention.

Le procédé de reproduction 100 s'effectue à partir d'un plant originel 150 qui se reproduit de manière végétative et qui comporte une tige 152 le long de laquelle se sont développées des feuilles 154, et à la base de laquelle poussent des racines 156 qui sont plantées dans un terrain approprié 10, comme de la terre ou du terreau.

Le procédé de reproduction 100 comporte:
- une étape de prélèvement 102 au cours de laquelle une partie 160 de la tige 152 du plant originel 150 est prélevée,
- une étape d'enfilage 104 au cours de laquelle un anneau 20 est enfilé sur la partie 160 ainsi prélevée,
- une étape de plantation 106 au cours de laquelle la partie 160 avec l'anneau 20 ainsi enfilé sont plantés dans un terrain approprié 12, comme par exemple ici un pot de terreau 12, et
- une étape de développement 108 au cours de laquelle la partie 160 ainsi plantée développe des racines 162 afin de donner un nouveau plant 170 et où l'anneau 20 se trouve emprisonné entre lesdites racines 162 et une feuille 154 dudit nouveau plant 170.

Le procédé permet ainsi d'obtenir le nouveau plant 170 muni de l'anneau 20, et ainsi l'anneau 20 qui est pris entre les racines 162 et les feuilles 154 ne peut plus être perdu d'où une meilleure traçabilité.

Le nouveau plant 170 est ainsi muni de l'anneau 20. Le nouveau plant 170 est toujours susceptible de se reproduire de manière végétative et comporte une tige le long de laquelle se développent des feuilles 154, et à la base de laquelle poussent des racines 162, tandis que l'anneau 20 est emprisonné entre lesdites racines 162 et une feuille 154.

La partie 160 qui est prélevée ne présente pas de racines 156, mais peut présenter des feuilles 154.

Comme la partie prélevée 160 présente des feuilles 154, l'étape d'enfilage 104 a lieu juste avant l'étape de plantation 106. Dans un mode de réalisation qui n'est pas couvert par l'invention, l'étape d'enfilage 104 peut avoir lieu juste après l'étape de plantation 106.

En outre, des plants qui ne posséderaient pas un tel anneau 20 peuvent facilement être identifiés comme pouvant être issus d'une reproduction non autorisée.

L'anneau 20 est constitué par tout élément formant une boucle fermée qui ne peut être ouverte que par destruction et dont les dimensions empêchent son retrait de la tige du nouveau plant 170 sans qu'il y ait destruction de l'anneau 20, des racines 162 ou des feuilles 154.

L'anneau 20 est préférentiellement en matière plastique pour présenter une résistance suffisante au déchirement.

L'étape de prélèvement 102 consiste par exemple en un sectionnement 101 de la tige 152 du plant originel 150.

Pour accélérer l'emprisonnement de l'anneau 20 entre une feuille 154 et les racines 162 du nouveau plant 170, il est préférable que, lors de l'étape de prélèvement 102, la partie 160 prélevée comporte au moins une feuille 154. Ainsi, la fin de l'étape de développement 108 est plus rapidement atteinte, puisqu'il suffit d'attendre que les racines 162 se développent sans attendre qu'une nouvelle feuille 154 pousse.

Pour limiter le risque de copie de l'anneau 20 par de potentiels contrefacteurs, ledit anneau 20 présente un élément codé difficilement reproductible, comme par exemple une puce RFID, un code à barres, ....

Bien entendu, la présente invention n'est pas limitée aux exemples et modes de réalisation décrits et représentées. Elle est tout de même limitée par l'étendue des revendications.

## Revendications

1. Procédé de reproduction (100) d'un plant originel (150) se reproduisant de manière végétative et comportant une tige (152) le long de laquelle se développent des feuilles (154), et à la base de laquelle poussent des racines (156), ledit procédé de reproduction (100) comportant successivement :
- une étape de prélèvement (102) au cours de laquelle une partie (160) de la tige (152) du plant originel (150) est sectionnée ladite partie (160) comporte au moins une feuille (154),
- une étape d'enfilage (104) au cours de laquelle un anneau (20) constitué par tout élément formant une boucle fermée qui ne peut être ouverte que par destruction, est enfilé sur la partie (160) ainsi prélevée par l'extrémité sectionnée,
- une étape de plantation (106) au cours de laquelle la partie (160) avec l'anneau (20) ainsi enfilé sont plantés dans un terrain approprié (12), et
- une étape de développement (108) au cours de laquelle la partie (160) ainsi plantée développe des racines (162) et où l'anneau (20) est emprisonné entre lesdites racines (162) et une feuille (154).

2. Procédé de reproduction (100) selon la revendication 1, **caractérisé en ce que**, lors de l'étape de prélèvement (102), la partie (160) prélevée comporte au moins une feuille (154).

3. Procédé de reproduction (100) selon l'une des revendications 1 ou 2, **caractérisé en ce que** l'anneau (20) présente un élément codé difficilement reproductible.

4. Plant (170) muni d'un anneau (20) et obtenu par un procédé de reproduction (100) selon l'une des revendications précédentes à partir d'un plant originel (150) se reproduisant de manière végétative et comportant une tige le long de laquelle se développent des feuilles (154), et à la base de laquelle poussent des racines (162). et l'anneau (20) constitué par tout élément formant une boucle fermée qui ne peut être ouverte que par destruction, étant emprisonné entre lesdites racines (162) et une feuille (154).

## Patentansprüche

1. Verfahren zur Zucht (100) einer ursprünglichen Pflanze (150), die sich auf vegetative Weise reproduziert und einen Stängel (152) aufweist, entlang dem sich Blätter (154) entwickeln und an dessen Basis Wurzeln (156) wachsen, wobei das Verfahren zur Zucht (100) nacheinander aufweist:
- einen Schritt des Entnehmens (102), bei dem ein Teil (160) des Stängels (152) der ursprünglichen Pflanze (150) abgetrennt wird, wobei der Teil (160) mindestens ein Blatt (154) aufweist,
- einen Schritt des Aufsteckens (104), bei dem ein Ring (20) der aus jedem Element gebildet ist, das eine geschlossene Schleife bildet, die nur durch Zerstören geöffnet werden kann, auf den auf diese Weise entnommenen Teil (160) durch das abgetrennte Ende gesteckt wird,
- einen Schritt des Pflanzens (106), bei dem der Teil (160) mit dem auf diese Weise aufgesteckten Ring (20) in einen geeigneten Boden (12) gepflanzt wird und
- einen Schritt des Entwickelns (108), bei dem der auf diese Weise gepflanzte Teil (160) Wurzeln (162) entwickelt und wo der Ring (20) zwischen den Wurzeln (162) und einem Blatt (154) eingeschlossen ist.

2. Verfahren zur Zucht (100) nach Anspruch 1, **dadurch gekennzeichnet, dass** bei dem Schritt des Entnehmens (102) der entnommene Teil (160) mindestens ein Blatt (154) aufweist.

3. Verfahren zur Zucht (100) nach einem der Ansprüche 1 oder 2, **dadurch gekennzeichnet, dass** der Ring (20) ein codiertes Element aufweist, das schwer reproduzierbar ist.

4. Pflanze (170), die mit einem Ring (20) versehen ist und durch ein Verfahren zur Zucht (100) nach einem der vorhergehenden Ansprüche ausgehend von einer ursprünglichen Pflanze (150) erhalten ist, die sich auf vegetative Weise reproduziert und einen Stängel aufweist, entlang dem sich Blätter (154) entwickeln und an dessen Basis Wurzeln (162) wachsen, und wobei der Ring (20), der aus jedem Element gebildet ist, das eine geschlossene Schleife bildet, die nur durch Zerstören geöffnet werden kann, zwischen den Wurzeln (162) und einem Blatt (154) eingeschlossen ist.

## Claims

1. Method (100) for reproducing an original plant (150) replicating in a vegetative manner and comprising a stem (152) along which develop leaves (154), and at the base of which grow roots (156), said method for reproducing (100) containing successively:
- a picking step (102) during which a part (160) of the stem (152) of the original plant (150) is cut, said part (160) comprises at least one leaf (154),
- a threading step (104) during which a ring (20) composed of any element forming a closed-loop which can be opened only by destruction, is threaded on the so picked part (160) by the cut extremity,
- a plantation step (106) during which the part (160) with the so threaded ring (20) are planted in an appropriate soil (12), and
- a development step (108) during which the so planted part (160) develops roots (162) and where the ring (20) is imprisoned between said roots (162) and a leaf (154).

2. Method (100) for reproducing according to the claim 1, **characterized in that**, during the picking step (102), the picked part (160) comprises at least one leaf (154).

3. Method (100) for reproducing according to one of the claims 1 or 2, **characterized in that** the ring (20) presents a coded element which is difficult to reproduce.

4. Plant (170) provided with a ring (20) and obtained by a method (100) for reproducing according to one of the previous claims from an original plant (150) replicating in a vegetative manner and comprising a stem along which develop leaves (154), and at the base of which grow roots (162), and the ring (20) is composed of any element forming a closed-loop which can be opened only by destruction, being imprisoned between said roots (162) and a leaf (154).
